Europäisches Patentamt

European Patent Office

Office européen des brevets

(19)

(11) Veröffentlichungsnummer : **0 056 086**
**B1**

(12) **EUROPÄISCHE PATENTSCHRIFT**

(45) Veröffentlichungstag der Patentschrift :
20.02.85

(21) Anmeldenummer : 81108328.6

(22) Anmeldetag : 14.10.81

(51) Int. Cl.⁴ : **H 04 Q 11/04**

(54) Schaltungsanordnung für Fernmeldevermittlungsanlagen, insbesondere PCM-Fernsprechvermittlungsanlagen, mit einer Zeitmultiplexkoppelanordnung mit Zeitlagenvielfachen.

(30) Priorität : 13.01.81 DE 3100811

(43) Veröffentlichungstag der Anmeldung :
21.07.82 Patentblatt 82/29

(45) Bekanntmachung des Hinweises auf die Patenterteilung : 20.02.85 Patentblatt 85/08

(84) Benannte Vertragsstaaten :
AT CH FR GB IT LI NL SE

(56) Entgegenhaltungen :
COMMUTATION & ELECTRONIQUE, nr. 43, october 1973, PARIS (FR), VOYER et al.: "Réseaux de connexion temporels à grande capacité", Seiten 52-70
INTERNATIONAL SWITCHING SYMPOSIUM, Oktober 25-29, 1976, LIEM et al.: "PRX/PDX, The evolution of a telephone system", Seiten 411-4-1 bis 411-4-8
COMMUTATION & ELECTRONIQUE, Nr. 50, Juli 1975, PARIS (FR), REVEL et al.: "Brasseur de voies entre liaisons numériques TN 1, Seiten 7-17

(73) Patentinhaber : Siemens Aktiengesellschaft
Berlin und München Wittelsbacherplatz 2
D-8000 München 2 (DE)

(72) Erfinder : Troost, Marcel Abraham, Dipl.-Ing.
Gabriele-Münter-Strasse 25
D-8000 München 71 (DE)

## Beschreibung

Die Erfindung betrifft eine Schaltungsanordnung für eine in Fernmeldevermittlungsanlagen, insbesondere PCM-Fernsprechvermittlungsanlagen, vorgesehene Zeitmultiplexkoppelanordnung, in der Verbindungen über Zeitlagenvielfache mit solchen Vollspeichern herstellbar sind, bei denen Schreibvorgänge und Lesevorgänge nur alternativ, z. B. kontinuierlich abwechselnd, jeweils während eines einer Zeitlage entsprechenden Zeitschlitzes durchführbar sind, und in der der Schreibbetrieb, der einer Aufnahme der eintreffenden Teilinformationen einzeln pro ankommenden Zeitkanal an Speicherplätzen des Vollspeichers dient, zyklisch und der Lesebetrieb, der einer Weitergabe dieser Teilinformationen einzeln über die abgehenden Zeitkanäle dient, gemäss Vermittlungsdaten durchgeführt wird, die die Zuordnung der abgehenden Zeitkanäle zu den ankommenden Zeitkanälen angeben und die pro abgehenden Zeitkanal auf Speicherplätzen eines Haltespeichers in Form von Speicherplatzadressen des Vollspeichers gespeichert sind bzw. umgekehrt, d. h. der Schreibbetrieb gemäss diesen Vermittlungsdaten und der Lesebetrieb zyklisch, durchgeführt wird, und in der zur Steuerung der Vollspeicher zweier Zeitlagenvielfache ein gemeinsamer Haltespeicher dient.

Eine Schaltungsanordnung dieser Art ist bereits durch die DE-AS 2 108 745 bekannt. In diesem Fall ist die Speicherkapazität des einem Haltespeichers so ausgelegt, dass sich mit ihm die Lesevorgänge — bzw. Schreibvorgänge — der beiden Vollspeicher zweier Zeitlagenvielfache durchführen lassen. In diesem Zusammenhang ist im bekannten Falle vorgesehen, dass während eines einzigen Lesevorganges im Haltespeicher immer zugleich zwei Vollspeicherplatzadressen gelesen werden, mit deren Hilfe dann zwei azyklisch durchgeführte Lesevorgänge — bzw. Schreibvorgänge — in den beiden Vollspeichern der beiden Zeitlagenvielfache abgewickelt werden. Zusammen mit jedem der demgegenüber zyklisch durchgeführten Lesevorgänge — bzw. Schreibvorgänge — kann an dem betreffenden Haltespeicher aber kein Schreibvorgang — bzw. Lesevorgang — durchgeführt werden, weil für diese am Vollspeicher zyklisch durchgeführten Vorgänge (Lesevorgänge bzw. Schreibvorgänge) keine Vollspeicherplatzadressen erforderlich sind. (Bekanntlich geht jeder der Lesevorgänge am Haltespeicher jeweils einem Lesevorgang — bzw. Schreibvorgang — am Vollspeicher voraus ; es liegt also keine völlige Gleichzeitigkeit vor, was zur Vermeidung eines Missverstehens der vorhergehenden Ausführungen dienen soll.) Festzustellen ist nun, dass im bekannten Falle Lesevorgänge am Haltespeicher immer nur im Zusammenhang mit den azyklisch am Vollspeicher abzuwickelnden Lesevorgängen — bzw. Schreibvorgängen — durchgeführt werden müssen, und dass im Zusammenhang mit den am Vollspeicher zyklisch durchzuführenden Schreibvorgängen — bzw. Lesevorgängen — am Haltespeicher keine Lesevorgänge durchgeführt werden müssen. Hinsichtlich der für die Durchführung der Lesevorgänge an den Haltespeichern vorgesehenen Schalteinrichtung sind die Haltespeicher zeitmässig nur sehr unvollkommen ausgenutzt.

Ferner zeigt und beschreibt auch die Zeitschrift « COMMUTATION & ELECTRONIQUE », Nr. 43, (PARIS Oktober 1973) in dem Artikel « Réseaux de connexion temporels à grande capacité » (Seiten 52-70) eine Zeitmultiplex-Fernsprechvermittlungsanlage mit Merkmalen der Schaltungsanordnung der eingangs angegebenen Art. Diese Vermittlungsanlage sieht für zwei Vollspeicher einen gemeinsamen Haltespeicher vor, geht dabei aber von einer Anordnung mit zwei Vollspeichern und mit zunächst zwei Haltespeichern aus. Dann ist jedoch die Feststellung getroffen, daß die in dem einen der beiden Haltespeicher gespeicherten Informationen die in dem anderen der beiden Haltespeicher gespeicherten Informationen bereits implizit enthalten, woraus sich ergibt, daß auf einen der beiden Haltespeicher verzichtet werden kann, indem ein gemeinsamer Haltespeicher für zwei Vollspeicher vorgesehen wird. Bei dieser Vermittlungsanlage verden jedoch Vollspeicher voraugsetzt, werden also benötigt, bei denen Schreibvorgänge und Lesevorgänge gleichzeiting, z. B. jeweils während eines einer Zeitlage entsprechenden Zeitschlitzes, durchführbar sind ; dies bedeutet also, daß in einem Vollspeicher zu jedem Zeitpunkt immer zugleich gelesen sowie auch geschrieben werden können muß. Die Erfindung geht jedoch von einer Schaltungsanordnung der eingangs angegebenen Art aus, wobei die Bedingung besteht, daß die Verbindungen über Zeitlagenvielfache mit solchen Vollspeichern hergestellt werden, bei denen Schreibvorgänge und Lesevorgänge immer nur alternativ, z. B. kontinuierlich abwechselnd, jeweils während eines einer Zeitlage entsprechenden Zeitschlitzes durchführbar sind ; dies bedeutet also, daß in einem Vollspeicher zu jedem Zeitpunkt immer nur entweder gelesen oder geschrieben werden kann. Diese einschränkende Bedingung ist in anderem Zusammenhang von Vorteil, sie bringt aber zugleich eine von der zuletzt genannten Literaturstelle nicht berührte Problemstellung mit sich : Da in Vollspeichern sowohl Schreibvorgänge als auch Lesevorgänge als auch diese vorbereitende Einstellvorgänge (Einstellung einer Vollspeicher-Schreibeinrichtung bzw. einer Vollspeicher-Leseeinrichtung auf den betreffenden Vollspeicherplatz) ausgeführt werden müssen und diese Vorgänge bei einer Schaltungsanordnung der eingangs angegebenen Art, von der ja die Erfindung ausgeht, nicht gleichzeitig ausgeführt werden können, ist die Leseeinrichtung des betreffenden Haltespeichers relativ unzureichend ausgenutzt.

Für die Erfindung besteht die Aufgabe, die Ausnutzung der Haltespeicher hinsichtlich ihrer zeitlichen Inanspruchnahme zu erhöhen.

Diese Aufgabe löst die Erfindung dadurch, daß der gemeinsame Haltespeicher die Vollspeicherplatzadressen sukzessive aufeinanderfolgend gemäß den aufeinanderfolgenden Zeitschlitzen, aber stets abwechselnd an die beiden Vollspeicher abgibt, und daß immer während eines Zeitschlitzes einerseits der eine der beiden Vollspeicher eine Vollspeicherplatzadresse vom Haltespeicher empfängt und mit seiner Lesevorrichtung — bzw. Schreibvorrichtung — zur Vorbereitung eines Lesevorganges — bzw. Schreibvorganges — auf den betreffenden Vollspeicherplatz eingestellt wird, und andererseits der andere der beiden Vollspeicher einen vom Haltespeicher unabhängigen Schreibvorgang — bzw. Lesevorgang — ausführt.

Durch die Erfindung wird die Möglichkeit geschaffen, in einer Schaltungsanordnung der eingangs genannten Art einen Haltespeicher hinsichtlich seiner für die Abwicklung der Lesevorgänge vorgesehenen Schalteinrichtung praktisch doppelt auszunutzen. Wenngleich dadurch auch nicht die Speicherkapazität eines Haltespeichers vergrößert wird, kann der für die Lesevorgänge und der für die Schreibvorgänge erforderliche schaltungstechnische Aufwand entsprechend dem höheren Ausnutzungsgrad verringert werden.

Die Erfindung sieht also eine Art Wechselbetrieb vor : Während jeweils der eine Vollspeicher während eines Zeitschlitzes (also in einer Zeitlage) auf einen durch die vom Haltespeicher ihm übertragene Vollspeicherplatzadresse auf den betreffenden Vollspeicherplatz eingestellt wird, und zwar zur Vorbereitung eines Lesevorganges — bzw. Schreibvorganges —, wird in dem jeweils anderen Vollspeicher ein solcher Lesevorgang bzw. Schreibvorgang durchgeführt ; während des unmittelbar darauf folgenden nächsten Zeitschlitzes vertauschen die beiden Vollspeicher ihre Rollen. Dadurch kann also die Leseeinrichtung des Haltespeichers wesentlich intensiver tätig sein.

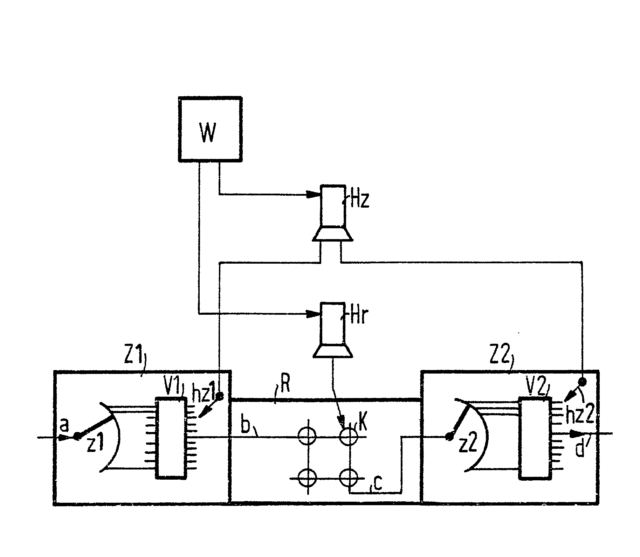

In der Zeichnung ist ein Ausführungsbeispiel der Erfindung nur im wesentlich zu ihrem Verständnis beitragenden Bestandteilen dargestellt. Die nachfolgende Beschreibung setzt ein für PCM-Verbindungen ausgelegtes mehrstufiges Koppelfeld, das teils aus Zeitstufen und teils aus Raumstufen aufgebaut ist, als für den Fachmann bereits vielfältig bekannt voraus ; beispielsweise ist in der bereits genannten Deutschen Auslegeschrift 2 108 745, insbesondere FIG 1 nebst Beschreibung, ein derartiges Koppelfeld dargestellt und beschrieben.

In der Zeichnung sind zwei Zeitlagenvielfache Z1 und Z2 sowie ein Raumlagenvielfach R dargestellt. Eine ankommende Zeitmultiplexleitung ist mit a und eine abgehende Zeitmultiplexleitung mit d bezeichnet. Zeitmultiplex-Zwischenleitungen sind mit b und c bezeichnet. Diese Zwischenleitungen verbinden das Zeitlagenvielfach

Z1 mit einem Eingang des Raumlagenvielfaches R, sowie einen Ausgang desselben mit dem Zeitlagenvielfach Z2. Das Raumlagenvielfach R weist in an sich bekannter Weise Koppelpunkte auf, von denen einer mit « K » bezeichnet ist.

Die dargestellten Zeitlagenvielfache und das Raumlagenvielfach sind Bestandteil einer grösseren PCM-Zeitmultiplexkoppelanordnung. Zur Herstellung einer Verbindung wird in an sich bekannter Weise mit Hilfe einer Wegesucheinrichtung W ein freier Verbindungsweg gesucht und ausgewählt, der über freier Verbindungskanäle der Zeitmultiplexleitungen aufgebaut werden kann. Im Zusammenhang hiermit sind Haltespeicher Hz und Hr vorgesehen. Der Haltespeicher Hz ist den Zeitlagenvielfachen Z1 und Z2 zugeordnet. Der Haltespeicher Hr ist dem Raumlagenvielfach R zugeordnet.

Die zuvor erwähnten Haltespeicher dienen zur Speicherung von Vermittlungsdaten, die die Zuordnung abgehender Zeitkanäle zu ankommenden Zeitkanälen jeweils innerhalb eines der genannten Vielfache angeben. Diese Zuordnung entspricht den Durchschaltedaten für jeweils eine Verbindung in einem Raumkoppevielfach konventioneller Art (Eingangskoordinatenleitungsnummer/Ausgangskoordinatenleitungsnummer).

Diese Vermittlungsdaten werden bekanntlich mit Hilfe einer Wegesucheinrichtung jeweils für eine Verbindung anhand von in einem Belegungsspeicher (in Anlagen älterer Bauart : Wegesuchnetzwerk) gespeicherten Daten über den Zustand (frei oder belegt) aller massgeblichen Teile des Koppelfeldes, hauptsächlich der Zwischenleitungen, durch informationsverarbeitende Verknüpfungsvorgänge ermittelt. Diese Vermittlungsdaten geben eindeutig den Verlauf einer über das mehrstufige Koppelfeld durchzuschaltenden und durchgeschalteten Verbindung hinsichtlich der dabei in Anspruch genommenen Zwischenleitungen und Koppelpunkte bzw. Zeitmultiplexleitungen, Zeitkanäle, Zeitlagen usw. an. Auch im vorliegenden Falle finden solche Wegesuchvorgänge für jede durchzuschaltende Verbindung statt. Handelt es sich dabei anstatt um eine Einkanalverbindung um eine Mehrkanalverbindung, so können mehrere solcher Wegesuchvorgänge einzeln für die dabei erforderlichen mehreren Verbindungsherstellungsvorgänge durchgeführt werden.

Die mittels Wegesuchvorgängen ermittelten Vermittlungsdaten werden — soweit sie eine über die betreffende Zeitmultiplexkoppelanordnung führende Verbindung betreffen, in den Haltespeichern der Zeitlagenvielfache und der Raumlagenvielfache gespeichert. Bei den Zeitlagenvielfachen sind den Kanalnummern der abgehenden Zeitkanäle die Speicherplätze des jeweils zugeordneten Haltespeichers bleibend zugeordnet. Die über die ankommenden Zeitkanäle einer PCM-Zeitmultiplexleitung pro Pulsrahmen eintreffenden verbindungsindividuellen Teilinformationen werden zyklisch in den dem betreffenden Zeitlagenvielfach, z. B. Z1, jeweils zugeordneten Vollspeicher, z. B. V1, eingeschrieben. Im Gegensatz hierzu erfolgt der Lesebetrieb, der einer Weitergabe dieser Teilinformationen einzeln über die abgehenden Zeitkanäle dient, gemäss den Vermittlungsdaten, die die Zuordnung der abgehenden Zeitkanäle zu den ankommenden Zeitkanälen angeben und pro abgehenden Zeitkanal auf Speicherplätzen des Haltespeichers in Form von Speicherplatzadressen der Vollspeicher gespeichert sind. Im Haltespeicher ist also pro abgehenden Zeitkanal auf einem jeweils diesem bleibend zugeordneten Speicherplatz angegeben, unter welcher Vollspeicher-Speicherplatzadresse die über diesen Zeitkanal weiterzugebende Teilinformation eingeschrieben, d. h. zwischengespeichert ist.

Den Zeitkanälen einer abgehenden Zeitmultiplexleitung sind — wie erläutert — die Speicherplätze des Haltespeichers bleibend zugeordnet. Zwecks Weitergabe der zwischengespeicherten Teilinformationen aus dem Vollspeicher werden folglich die Speicherplätze des Haltespeichers gemäss den Zeitlagen der abgehenden Zeitkanäle zyklisch angesteuert.

Das zuvor erwähnte zyklische Einschreiben der über eine an einem PCM-Zeitlagenvielfach, z. B. Z1, Z2, ankommenden Zeitmultiplexleitung, z. B. a, c, eintreffenden Teilinformationen in den Vollspeicher, z. B. V1, V2, des betreffenden Zeitlagenvielfaches erfolgt mit Hilfe einer Ansteuerschreibeinrichtung, z. B. z1, z2. Die Ansteuerschreibeinrichtung eines Zeitlagenvielfaches wird also zwecks Abwicklung dieses zyklischen Einschreibens kontinuierlich weitergeschaltet.

Das Auslesen der über eine von einem PCM-Zeitlagenvielfach, z. B. Z1, Z2, weiterführenden Zeitmultiplexleitung, z. B. b, d, erfolgt mit Hilfe des betreffenden Haltespeichers. Den beiden Zeitlagenvielfachen Z1 und Z2 ist der Haltespeicher Hz gemeinsam zugeordnet. Den Zeitlagen der einzelnen Zeitkanäle der von den Zeitlagenvielfachen Z1 und Z2 abgehenden PCM-Zeitmultiplexleitungen b und d sind die Speicherplätze des Haltespeichers Hz fest zugeordnet. Die Speicherplätze des Haltespeichers werden in nicht dargestellter und an sich bekannter Weise zyklisch angesteuert.

Im vorliegenden Falle ist die Zuordnung der Haltespeicherplätze des Haltespeichers Hz zu den Zeitlagen der Zeitkanäle der PCM-Zeitmultiplexleitungen b und d so getroffen, dass die im Haltespeicher Hz aufeinander folgenden Speicherplätze in einem von Speicherplatz zu Speicherplatz fortschreitenden stetigen Wechsel zwischen den beiden PCM-Zeitmultiplexleitungen deren Zeitkanälen zugeordnet sind. Beim zyklischen Auslesen der im Haltespeicher Hz gespeicherten Vollspeicherplatzadressen der Vollspeicher V1 und V2 werden also Vollspeicherplatzadressen des einen und des anderen dieser beiden Vollspeicher im stetigen Wechsel abgegeben. Mittels der Vollspeicherplatzadressen des Vollspeichers V1 wird in an sich bekannter Weise dessen Ansteuerleseeinrichtung hz1 gesteuert. Ebenso wird mit Hilfe der Vollspeicherplatzadressen des Vollspeichers V2 dessen Ansteuerleseeinrichtung hz2 gesteuert. Da die im Haltespeicher Hz pro abgehende Zeitmultiplexleitung b und d gespeicherten Vermittlungsdaten jeweils die Zuordnung zwischen einem Zeitkanal auf der abgehenden Zeitmultiplexleitung und einem Zeitkanal auf der ankommenden Zeitmultiplexleitung angeben, ist durch die beschriebene Steuerung der Ansteuerleseeinrichtungen hz1 und hz2 bestimmt, von welchem ankommenden Zeitkanal jeweils diejenige Teilinformation stammt, die über den abgehenden Zeitkanal zur Aussendung kommt, welcher gemäss zyklischem Auslesevorgang des Haltespeichers Hz in der gegebenen Zeitlage gerade zum Aussenden der betreffenden Teilinformation zeitlich an der Reihe ist.

Die Steuerung des Raumlagenvielfaches R mit Hilfe des Haltespeichers Hr ist nicht Gegenstand der Erfindung. Die betreffenden Steuervorgänge erfolgen in an sich bekannter Weise, wozu auf die bereits genannte Auslegeschrift hingewiesen sei.

Bei den Zeitlagenvielfachen Z1 und Z2 sind die Schreibvorgänge und Lesevorgänge an den Vollspeichern V1 und V2 in an sich bekannter Weise nur alternativ, z. B. kontinuierlich abwechselnd durchführbar. Wie erläutert, wird der Schreibbetrieb, der einer Aufnahme der eintreffenden Teilinformationen einzeln pro ankommenden Zeitkanal an Speicherplätzen des Vollspeichers dient, zyklisch, und der Lesebetrieb, der einer Weitergabe dieser Teilinformationen einzeln über die abgehenden Zeitkanäle dient, gemäss den Vermittlungsdaten durchgeführt, die die Zuordnung der abgehenden Zeitkanäle zu den ankommenden Zeitkanälen angeben und pro abgehenden Zeitkanal auf Speicherplätzen des Haltespeichers Hz in Form von Speicherplatzadressen der Vollspeicher V1 und V2 gespeichert sind, durchgeführt. Im Gegensatz hierzu kann diese Zuordnung auch in umgekehrter Weise vorgesehen werden. Dies würde also bedeuten, dass der Schreibbetrieb gemäss den genannten Vermittlungsdaten und der Lesebetrieb zyklisch durchgeführt wird. Dies ist im einzelnen in der bereits oben erwähnten Auslegeschrift beschrieben.

Wie ebenfalls bereits erwähnt wurde, dient zur Steuerung der beiden Vollspeicher V1 und V2 der beiden Zeitlagenvielfache Z1 und Z2 der gemeinsame Haltespeicher Hz. Bei den Vollspeichern der Zeitlagenvielfache erfolgt immer abwechselnd nacheinander ein Steuervorgang für die Ansteuerschreibeinrichtung, z. B. z1 und ein Schreibvorgang. Ebenso erfolgt immer abwechselnd nacheinander ein Steuervorgang für die Ansteuerleseeinrichtung, z. B. hz1, und ein Lesevorgang. Von den beiden Zeitlagenvielfachen Z1 und Z2 befindet sich der Vollspeicher, z. B. V1, des einen im Lesebetrieb, wenn der Vollspeicher, z. B. V2, des anderen im Schreibbetrieb ist, und umgekehrt. Demgemäss sind auch die sukzessive nacheinander aus dem gemeinsamen Haltespeicher Hz zu lesenden Vollspeicher-Speicherplatzadressen in ihrer Folge abwechselnd dem einen und dem anderen der beiden Zeitlagenvielfache zugeordnet. Demgemäss finden die bei diesen beiden Zeitlagenvielfachen durchzuführenden Lesevorgänge bzw. Schreibvorgänge kontinuierlich zwischen ihnen abwechselnd statt. Bei jedem der Zeitlagenvielfache ist immer dann ein Schreibvorgang durchführbar, wenn beim jeweils anderen Zeitlagenvielfach ein Lesevorgang stattfindet und umgekehrt.

Der Haltespeicher Hz weist ausser einem Speicher mit der Anzahl der für die beiden Vollspeicher V1 und V2 zu speichernden Vollspeicher-Speicherplatzadressen entsprechenden Anzahl von Speicherplätzen eine Ansteuerschreibeinrichtung und eine Ansteuerleseeinrichtung auf. Über die Ansteuerschreibeinrichtung werden die mit Hilfe der Wegesucheinrichtung W ermittelten Vermittlungsdaten in den Haltespeicher Hz eingeschrieben. Mit Hilfe der Ansteuerleseeinrichtung des Haltespeichers Hz werden diese Vermittlungsdaten in der beschriebenen Weise aus den Speicherplätzen des Haltespeichers ausgelesen. Dadurch, dass die beiden Vollspeicher V1 und V2 in der beschriebenen Weise immer abwechselnd zum Empfang einer Vollspeicher-Speicherplatzadresse vom Haltespeicher Hz empfangsbereit sind, kann die Ansteuerleseeinrichtung des Haltespeichers Hz ununterbrochen in Betrieb sein, indem sie immer dann, wenn bei dem einen der beiden Vollspeicher der Lesevorgang abgewickelt wird, an den anderen der beiden Vollspeicher eine Vollspeicher-Speicherplatzadresse überträgt, die zur erneuten Einstellung der Ansteuerleseeinrichtung dieses anderen Vollspeichers dient. Durch die beschriebenen Massnahmen ist es möglich, die Haltespeicher wesentlich besser auszunutzen.

Auch beim Haltespeicher Hz sind Schreibvorgänge und Lesevorgänge ebenso wie bei den Vollspeichern immer nur alternativ durchführbar. Wenn also beim Haltespeicher Hz ein Lesevorgang abgewickelt wird, kann nicht zur gleichen Zeit auch ein Schreibvorgang durchgeführt werden. (Allerdings wäre die Erfindung auch realisierbar, wenn Haltespeicher verwendet werden, bei denen ein Schreibvorgang und ein Lesevorgang auch gleichzeitig durchgeführt werden kann.) Im Zusammenhang damit, dass beim dargestellten Haltespeicher Hz Schreibvorgänge und Lesevorgänge immer nur alternativ durchführbar sind, ist vorgesehen, dass die einem der Zeitvielfache geltenden und für eine im Aufbau befindliche Verbindung gebildeten Vermittlungsdaten im Haltespeicher an dem betreffenden Speicherplatz (das ist derjenige Speicherplatz, der der Zeitlage des bei der im Aufbau befindlichen Verbindung neu belegten, von diesem Zeitvielfach abgehenden Zeitkanal entspricht) in einer bestimmten Zeitlage eingeschrieben werden, und zwar in derjenigen Zeitlage, die dem Zeitkanal zugeordnet ist, der bei der im Aufbau befindlichen Verbindung neu belegt worden ist. Da diese Verbindung sich noch erst im Aufbaustadium befindet, sind für sie noch keine Vermittlungsdaten aus den betreffenden Haltespeichern auszulesen. In den entsprechenden Zeitlagen müssen bei diesen Haltespeichern also noch keine Lesevorgänge durchgeführt werden ; deshalb wird in der betreffenden Zeitlage der Schreibvorgang für die Vermittlungsdaten für die im Aufbau befindliche Verbindung durchgeführt.

**Anprüche**

1. Schaltungsanordnung für eine in Fernmeldevermittlungsanlagen, insbesondere PCM-Fernsprechvermittlungsanlagen, vorgesehene Zeitmultiplexkoppelanordnung, in der Verbindungen über Zeitlagenvielfache (Z1, Z2) mit solchen Vollspeichern (V1, V2) herstellbar sind, bei denen Schreibvorgänge und Lesevorgänge nur alternativ, z. B. kontinuierlich abwechselnd, jeweils während eines einer Zeitlage entsprechenden Zeitschlitzes durchführbar sind, und in der der Schreibbetrieb (mittels z1, z2) der einer Aufnahme der eintreffenden Teilinformationen einzeln pro ankommenden Zeitkanal (über a) an Speicherplätzen des Vollspeichers (V1, V2) dient, zyklisch und der Lesebetrieb (mittels hz1, hz2) der einer Weitergabe dieser Teilinformationen einzeln über die abgehenden Zeitkanäle (über d) dient, gemäß Vermittlungsdaten durchgeführt wird, die die Zuordnung der abgehenden Zeitkanäle zu den ankommenden Zeitkanälen angeben und pro abgehenden Zeitkanal auf Speicherplätzen eines Haltespeichers (Hz) in Form von Speicherplatzadressen des Vollspeichers (V1, V2) gespeichert sind bzw. umgekehrt, d. h. der Schreibbetrieb gemäß diesen Vermittlungsdaten und der Lesebetrieb zyklisch, durchgeführt wird, und in der zur Steuerung der Vollspeicher (V1, V2) zweier Zeitlagenvielfache ein gemeinsamer Haltespeicher (Hz) dient, dadurch gekennzeichnet, daß der gemeinsame Haltespeicher (Hz) die Vollspeicherplatzadressen sukzessive aufeinanderfolgend gemäß den aufeinanderfolgenden Zeitschlitzen, aber stets abwechselnd an die beiden Vollspeicher (V1, V2) abgibt, und daß immer während eines Zeitschlitzes einerseits der eine der beiden Vollspeicher (z. B. V1) eine Vollspeicherplatzadresse vom Haltespeicher (Hz) empfängt und mit seiner Lesevorrichtung (z. B. hz1) — bzw. Schreibvorrichtung (z. B. z1) — zur Vorbereitung eines Lesevorganges — bzw. Schreibvorganges — auf den betreffenden Vollspeicherplatz eingestellt wird, und andererseits der andere der beiden Vollspeicher (z. B. V2) einen vom Haltespeicher (Hz) unabhängigen Schreibvorgang (z. B. über z2) — bzw. Lesevorgang (z. B. über z2) — ausführt.

2. Schaltungsanordnung nach Anspruch 1, dadurch gekennzeichnet, daß von den für eine im Aufbau befindliche Verbindung gebildeten Vermittlungsdaten nur diejenigen, die einem der Zeitvielfache (z. B. Z1) gelten und demgemäß in dem betreffenden Haltespeicher (Hz) an dem der Zeitlage des bei der im Aufbau befindlichen Verbindung neu belegten, von diesem Zeitvielfach abgehenden Zeitkanals zugeordneten Speicherplatz des Haltespeichers (Hz) zu speichern sind, zu eben dieser Zeitlage in den Haltespeicher (Hz) eingeschrieben werden.

## Claims

1. A circuit arrangement for a t.d.m. switching arrangement which is provided in telecommunications exchange systems, in particular PCM telephone exchange systems, and in which connections can be established via time slot multiplexers (Z1, Z2) with full stores (V1, V2) in which write operations and read operations can be carried out only alternatively, e. g. in continuous alternation, in each case during a time interval corresponding to a time slot, and in which the write operation (by means of z1, z2), which serves to receive the incoming items of subsidiary information individually in respect of each incoming time channel (via a) in storage positions of the full store (V1, V2), is carried out cyclically, and the read operation (by means of hz1, hz2), which serves to forward these items of subsidiary information individually via the outgoing time channels (via d), is carried out in accordance with items of switching data which indicate the assignment of the outgoing time channels to the incoming time channels and in respect of each outgoing time channel are stored in storage positions of a hold store (Hz) in the form of storage position addresses of the full store (V1, V2) or vice versa, i. e. the write operation is carried out in accordance with these items of switching data and the read operation is carried out cyclically, and in which a common hold store (Hz) serves to control the full stores (V1, V2) of the two time slot multiplexers, characterised in that the common hold store (Hz) supplies the two full stores (V1, V2) with the full store position addresses successively in accordance with the consecutive time intervals but in continuous alternation, and that during each time interval on the one hand one of the two full stores (e. g. V1) receives a full store position address from the hold store (Hz) and with its read device (e. g. hzl) — or write device (e. g. z1) — is set at the relevant full store position for the preparation of a read operation — or a write operation — respectively, and on the other hand the other of the two full stores (e. g. V2) carries out a write operation (e. g. via z2) — or read operation (e. g. via z2) — which is independent of the hold store (Hz).

2. A circuit arrangement as claimed in claim 1, characterised in that of the items of switching data formed for a connection which is being established, only those items which apply to one of the time multiplexers (e. g. Z1) and accordingly are to be stored in the relevant hold store (Hz) in the storage position thereof which is assigned to the time slot of the time channel which is newly seized in the connection which is being established and which leads out from this time multiplexer, are recorded in this time slot in the hold store (Hz).

## Revendications

1. Montage pour un dispositif de couplage à multiplexage temporel prévu dans des installations de télécommunications, notamment dans des installations de téléphonie MIC, et dans lequel des liaisons peuvent être établies par l'intermédiaire de multiples (Z1, Z2) servant au multiplexage de créneaux temporels, comportant des mémoires totales (V1, V2) dans lesquelles des processus d'enregistrement et des processus de lecture peuvent être exécutés seulement en alternance, par exemple d'une manière continue et alternée, respectivement pendant une tranche de temps correspondant à un créneau temporel, et dans lequel le fonctionnement à l'enregistrement (au moyen de z1, z2), qui sert à réaliser un enregistrement des informations partielles arrivantes individuellement pour chaque canal temporel d'arrivée (par l'intermédiaire de a) dans des cases de la mémoire totale (V1, V2), est exécuté de façon cyclique et le fonctionnement de lecture (au moyen de hz1, hz2), qui sert à réaliser une retransmission de ces informations partielles individuellement par l'intermédiaire des canaux temporels de départ (par l'intermédiaire de d), est exécuté conformément à des données de commutation, qui indiquent l'association des canaux temporels de départ aux canaux temporels d'arrivée et sont mémorisées, pour chaque canal temporel de départ, dans des cases d'une mémoire de maintien (hz) réalisée sous la forme d'adresses de cases de la mémoire totale (V1, V2) ou inversement, c'est-à-dire que le fonctionnement à l'enregistrement est exécuté conformément à ces données de commutation et le fonctionnement à la lecture est effectué cycliquement, et dans lequel une mémoire de maintien commune (Hz) est utilisée pour réaliser la commande des mémoires totales (V1, V2) de deux multiples servant au multiplexage des créneaux temporels, caractérisé par le fait que la mémoire de maintien commune (Hz) délivre les adresses des cases des mémoires totales successivement conformément aux tranches de temps successives, mais toujours de façon alternée aux deux mémoires totales (V1, V2), et que toujours pendant une tranche de temps, d'une part l'une des deux mémoires totales (par exemple V1) reçoit une adresse de case de mémoire totale de la part de la mémoire de maintien (Hz) et est réglée sur la case de mémoire totale concernée au moyen de son dispositif de lecture (par exemple hz1) — ou au moyen de son dispositif d'enregistrement (par exemple z1) — pour la préparation d'une opération de lecture — ou d'une opération d'enregistrement — et d'autre part l'autre des deux mémoires totales (par exemple V2) exécute une opération d'enregistrement (par exemple par l'intermédiaire de z2) — ou une opération de lecture (par exemple par l'intermédiaire de z2) — indépendante de la mémoire de maintien (Hz).

2. Montage suivant la revendication 1, caractérisé par le fait que parmi les données de commutation formées pour une liaison en cours d'établissement, seules les données de commutation, qui sont valables pour l'un des multiples temporels (par exemple Z1) et doivent être mémorisées par conséquent dans la mémoire de maintien (Hz) considérée, dans la case de cette mémoire de maintien, qui est associée au créneau temporel nouvellement occupé pour la liaison en cours d'établissement et partant de ce multiple temporel, sont enregistrées dans la mémoire de maintien (Hz) précisément pendant ce créneau temporel.